# EUROPEAN PATENT APPLICATION

(11) **EP 4 362 455 A1**
(43) Date of publication of application: **01.05.2024**
(21) Application number: 23204856.1
(22) Date of filing: 20.10.2023
(51) Int. Cl.: H04N 7/18, H04N 21/218, H04N 21/234, H04N 21/44

(54) **POSITION PREDICTION PROGRAM, INFORMATION PROCESSING DEVICE, AND POSITION PREDICTION METHOD**

(30) Priority: 27.10.2022 JP 2022172099
(71) Applicant: FUJITSU LIMITED, Kawasaki-shi, Kanagawa 211-8588 (JP); Acuity Inc., Tokyo 108-0075 (JP)
(72) Inventor: ISHII, Daisuke, Kawasaki-shi, 211-8588 (JP); IKKAKU, Kento, Kawasaki-shi, 211-8588 (JP); WADA, Satoru, Minato-ku, 108-0075 (JP); SUZUKI, Ryoga, Minato-ku, 108-0075 (JP); OYAMA, Yuma, Minato-ku, 108-0075 (JP); SATO, Shimpei, Minato-ku, 108-0075 (JP)
(74) Representative: Haseltine Lake Kempner LLP

(57) **Abstract**

A non-transitory computer-readable storage medium storing therein a position prediction program that causes a computer to execute a process comprising: first calculating, from each of a second positions of a positioning object at a plurality of prediction timings in the past, a third position of the positioning object at a prediction timing; second calculating, on the basis of the second position at a last prediction timing out of the plurality of prediction timings and a first position of the positioning object calculated from image data received from a shooting device after the last prediction timing, a fourth position of the positioning object at the prediction timing; and predicting the second position at the prediction timing on the basis of the third position and the fourth position.

## Description

### FIELD

The present invention relates to a position prediction program, an information processing device, and a position prediction method.

### BACKGROUND

Information processing systems that calculate positions of positioning objects (e.g., people and things) from video data have emerged in recent years. Such information processing systems perform tracking of the positioning objects by performing analysis processing on video data obtained in real-time from shooting devices, e.g., cameras or the like (hereinafter also referred to simply as "shooting devices"), (e.g., see Japanese Patent Application Publication Nos. 2022-072347, 2019-092052, and 2000-348181).

### SUMMARY

With the foregoing in view, it is desirable to provide a position prediction program, an information processing device, and a position prediction method that enable tracking of positioning objects with to be performed with high precision.

According to an embodiment of one aspect of the invention, a non-transitory computer-readable storage medium storing therein a position prediction program that causes a computer to execute a process comprising: first calculating, from each of a second positions of a positioning object at a plurality of prediction timings in the past, a third position of the positioning object at a prediction timing; second calculating, on the basis of the second position at a last prediction timing out of the plurality of prediction timings and a first position of the positioning object calculated from image data received from a shooting device after the last prediction timing, a fourth position of the positioning object at the prediction timing; and predicting the second position at the prediction timing on the basis of the third position and the fourth position, wherein the second calculating includes: in a case in which a plurality of the first positions are calculated between after the last prediction timing and the prediction timing, calculating each of fifth positions of the positioning object at the prediction timing by using each of a plurality of the first positions that have been calculated, and out of the fifth positions that are calculated, calculating a position regarding which a positional relation as to the third position satisfies a predetermined condition as the fourth position.

### BRIEF DESCRIPTION OF DRAWINGS

The invention is described, by way of example only, with reference to the following drawings, in which:
FIGS. 1 and 2 are drawings for describing the configuration of the information processing system 10.
FIG. 3 is a diagram describing the hardware configuration of the information processing device 1.
FIG. 4 is a diagram describing the functions of the information processing device 1 according to the first embodiment.
FIGS. 5 to 7 are flowcharts that describe an overview of position prediction processing according to the first embodiment.
FIGS. 8 to 10 are flowcharts describing the position prediction processing according to the first embodiment.
FIGS. 11 to 16 are diagrams describing a specific example of position prediction processing.

### DESCRIPTION OF EMBODIMENTS

Such information processing systems perform tracking while predicting positions of positioning objects at a predetermined amount of time in advance, by using positions of positioning objects identified from video data (hereinafter, also referred to as "observation position").

However, the timing of arrival of video data is not uniform in such information processing systems in some cases due to, for instance, communication conditions on a network between the shooting device and the information processing system. Accordingly, there are cases in which information processing systems are not able to predict positions of positioning objects, for instance, and are not able to perform tracking of the positioning objects with high precision. Hereinafter, a configuration of an information processing system 10 will be described.

Configuration of Information Processing System According to First Embodiment

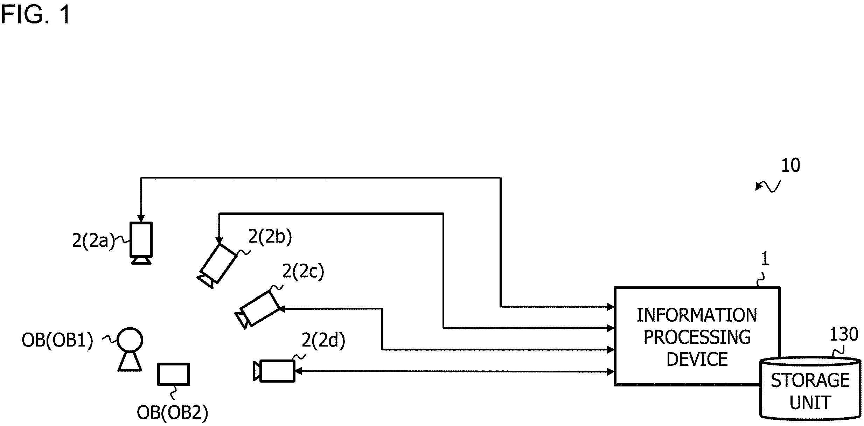

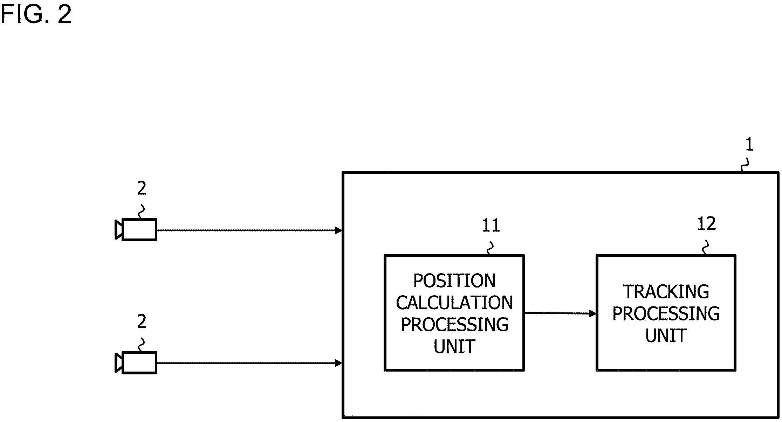

First, a configuration of an information processing system 10 will be described. FIGS. 1 and 2 are drawings for describing the configuration of the information processing system 10.

The information processing system 10 illustrated in FIG. 1 may include, for instance, an information processing device 1, a shooting device 2a, a shooting device 2b, a shooting device 2c, and a shooting device 2d. Hereinafter, the shooting device 2a, the shooting device 2b, the shooting device 2c, and the shooting device 2d may also be collectively referred to simply as "shooting devices 2". Note that while a case in which the information processing system 10 has four shooting devices 2 will be described below, the number of shooting devices 2 that the information processing system 10 may be other than four, for instance.

The shooting devices 2 may be, for instance, fixed-point cameras installed indoors in a factory or the like, and continuously perform shooting over a shooting range. That is to say, the shooting devices 2 may, for instance, shoot a positioning object OB, e.g., a person OB1, a thing OB2, or the like, within the shooting range. The shooting devices 2 may then, for instance, transmit video data that is shot (individual frames making up the video data) to the information processing device 1 in real time.

Note that the shooting devices 2 may shoot video data at 10 frames per second (fps), for instance, and perform transmission thereof to the information processing device 1. That is to say, the shooting devices 2 may, for instance, transmit frames (hereinafter, also referred to as "image data") to the information processing device 1 every 100 milliseconds (ms).

The information processing device 1 may be, for instance, one or more physical machines or one or more virtual machines. The information processing device 1 may, for instance, include a position calculation processing unit 11 that calculates a position (hereinafter also referred to as "observation position" or "first position") of the positioning object OB in each piece of image data shot by the shooting devices 2, as illustrated in FIG. 2. That is to say, the position calculation processing unit 11 may, for instance, calculate the observation position of the positioning object OB from information included in received image data, each time that the image data is received from the shooting devices 2.

The information processing device 1 may, for instance, also include a tracking processing unit 12 that performs tracking of the positioning object OB, by performing processing (hereinafter, also referred to as "position prediction processing") for predicting the position (hereinafter, also referred to as "posterior estimation position" or "second position") of the positioning object OB at the next prediction timing (hereinafter, also referred to simply as "prediction timing"), using the observation position calculated by the position calculation processing unit 11. The prediction timing may be a timing of every predetermined amount of time, e.g., every 200 ms or the like, for instance. That is to say, each time the position calculation processing unit 11 calculates the observation position, the tracking processing unit 12 predicts the posterior estimation position of the positioning object OB at the next prediction timing, using the calculated observation position.

Specifically, the information processing device 1 according to the present embodiment may calculate, for instance, from each of the posterior estimation positions of the positioning object OB at a plurality of prediction timings in the past (hereinafter, also referred to simply as "plurality of prediction timings"), the positions of the positioning object OB at the next prediction timing (hereinafter, referred to as "prior estimation position" or "third position"), using the tracking processing unit 12. The information processing device 1 may then calculate, for instance, the positions of the positioning object OB at the next prediction timing (hereinafter, also referred to as "observation prediction position" or "fourth position"), on the basis of the posterior estimation position at the last prediction timing of the plurality of prediction timings (hereinafter, also referred to simply as "last prediction timing"), and the observation position calculated from the image data received from the shooting devices 2 after the last prediction timing. Thereafter, the information processing device 1 may predict the posterior estimation position on the basis of the prior estimation position and the observation prediction position, for instance.

More specifically, in a case in which a plurality of observation positions are calculated between after the last prediction timing and the next prediction timing, for instance, the information processing device 1 according to the present embodiment may calculate each of candidate positions of observation prediction positions of the positioning object OB at the next prediction timing (hereinafter, also referred to simply as "candidate position" or "fifth position") by using each of the plurality of observation positions. The information processing device 1 may then calculate, for instance, a position out of the calculated candidate positions regarding which a positional relation as to the candidate positions satisfies predetermined conditions, as the observation prediction position.

That is to say, in a case in which a plurality of observation positions that are usable for calculation of the observation prediction position arise between the prediction timing of the previous time and the next prediction timing, for instance, the information processing device 1 according to the present embodiment may use, out of the candidate positions calculated using each observation position, the candidate position that is the closest to the prior estimation position, as the observation prediction position.

Thus, the information processing device 1 according to the present embodiment can calculate the posterior estimation position of the positioning object OB at the next prediction timing, even in a case in which the communication conditions on the network between the shooting devices 2 and the information processing device 1 are not good, and the reception timing of image data at the position calculation processing unit 11 is not unform, for instance. Also, the information processing device 1 can calculate the posterior estimation position of the positioning object OB at the next prediction timing, even in a case in which reception timing of the observation position at the tracking processing unit 12 is not uniform, due to processing latency or the like occurring at the position calculation processing unit 11 (i.e., upstream from the tracking processing unit 12), for instance. Accordingly, the information processing device 1 can perform tracking of the positioning object OB with good precision even in such cases, for instance.

### Hardware Configuration of Information Processing Device

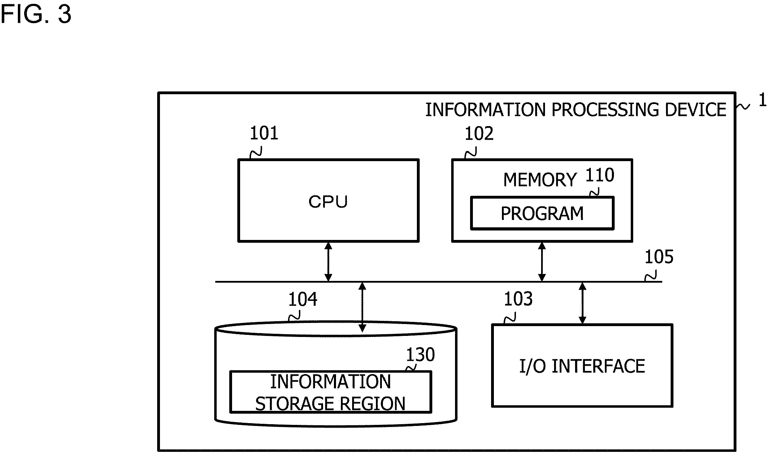

Next, a hardware configuration of the information processing device 1 will be described. FIG. 3 is a diagram describing the hardware configuration of the information processing device 1.

The information processing device 1 may include, for instance, a central processing unit (CPU) 101 that is a processor, memory 102, a communication device (I/O interface) 103, and storage 104, as illustrated in FIG. 3. These components are connected to each other via a bus 105.

The storage 104 may have a program storage region (omitted from illustration) that stores a program 110 for performing position prediction processing, for instance. The storage 104 may also have a storage unit 130 (hereinafter, also referred to as "information storage region 130") that stores information used at the time of performing position prediction processing, for instance. Note that the storage 104 may be a hard disk drive (HDD) or a solid state drive (SSD), for instance.

The CPU 101 may perform position prediction processing by executing the program 110 loaded to the memory 102 from the storage 104, for instance.

Also, the communication device 103 may perform communication with the shooting devices 2 via a network, e.g., the Internet or the like, for instance.

### Functions of Information Processing Device According to First Embodiment

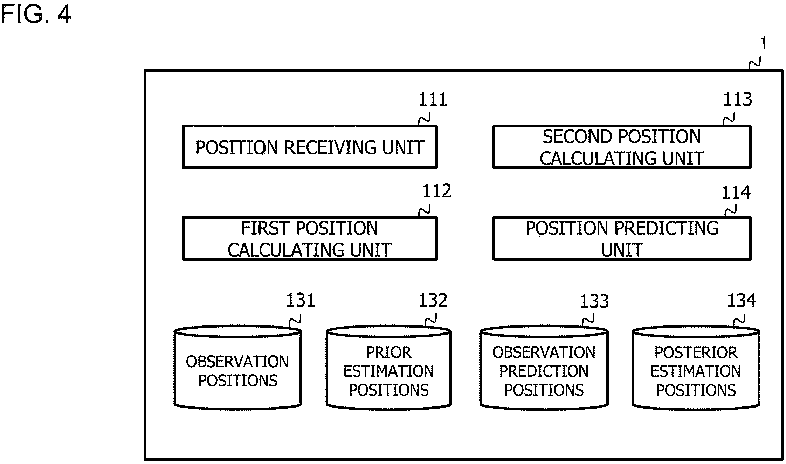

Next, functions of the information processing device 1 according to a first embodiment will be described. FIG. 4 is a diagram describing the functions of the information processing device 1 according to the first embodiment.

As illustrated in FIG. 4, the information processing device 1 may realize various types of functions including a position receiving unit 111, a first position calculating unit 112, a second position calculating unit 113, and a position predicting unit 114, as functions of the tracking processing unit 12, by hardware, e.g., the CPU 101, the memory 102, and so forth, and the program 110, organically collaborating, for instance.

Also, the information storage region 130 may store, for instance, observation positions 131, prior estimation positions 132, observation prediction positions 133, and posterior estimation positions 134, as illustrated in FIG. 4.

The position receiving unit 111 may receive observation positions 131 calculated at the position calculation processing unit 11, for instance. The position receiving unit 111 may then store the received observation positions 131 in the information storage region 130, for instance.

The first position calculating unit 112 may calculate, for instance, the prior estimation position 132 of the positioning object OB at the next prediction timing from each of the posterior estimation positions 134 of the positioning object OB at a plurality of prediction timings in the past. The first position calculating unit 112 may then store the calculated prior estimation position 132 in the information storage region 130, for instance.

Specifically, the first position calculating unit 112 may, for instance, estimate the posterior estimation position 134 of the positioning object OB at the next timing, from a trail of the posterior estimation positions 134 of the positioning object OB at the plurality of prediction timings in the past, and calculate the estimated posterior estimation position 134 as the prior estimation position 132.

More specifically, the first position calculating unit 112 may calculate, for instance, a position that is on an extended line of the trail of the posterior estimation positions 134 of the positioning object OB at the plurality of prediction timings in the past, and that is at a distance from the posterior estimation position 134 at the last prediction timing, to which the positioning object OB can be predicted to advance by the next prediction timing, as the prior estimation position 132. Note that the first position calculating unit 112 may calculate, for instance, an average distance of two posterior estimation positions 134 in consecutive prediction timings out of the posterior estimation positions 134 at the plurality of prediction timings in the past, as the distance that the positioning object OB can be predicted to advance by the next prediction timing.

The second position calculating unit 113 may calculate, for instance, the observation prediction position 133 of the positioning object OB at the next prediction timing, on the basis of the posterior estimation position 134 at the last prediction timing out of the plurality of prediction timings in the past, and the observation position 131 received from the position calculation processing unit 11 after the last prediction timing. The second position calculating unit 113 may then, for instance, store the calculated observation prediction position 133 in the information storage region 130.

Specifically, the second position calculating unit 113 may calculate, for instance, a position that is on an extended line of a straight line connecting the posterior estimation position 134 at the last prediction timing and the observation position 131 received from the position calculation processing unit 11 after the last prediction timing, and that is at a distance from the posterior estimation position 134 at the last prediction timing, to which the positioning object OB can be predicted to advance by the next prediction timing, as the observation prediction position 133.

More specifically, in a case in which the position calculation processing unit 11 calculates a plurality of observation positions 131 between after the last prediction timing and the next prediction timing (in a case in which a plurality of observation positions 131 are transmitted from the position calculation processing unit 11), for instance, the second position calculating unit 113 may use each of the plurality of observation positions 131 to calculate respective candidate positions for the observation prediction position 133 of the positioning object OB at the next prediction timing. The second position calculating unit 113 may then calculate, for instance, a position out of the calculated candidate positions regarding which a positional relation as to the prior estimation position 132 calculated by the first position calculating unit 112 satisfies predetermined conditions, as the observation prediction position 133.

Note that in this case, the second position calculating unit 113 may calculate, for instance, a position that is closest to the prior estimation position 132 calculated by the first position calculating unit 112 out of the calculated candidate positions, as the observation prediction position 133. Also, the second position calculating unit 113 may calculate, for instance, out of the calculated candidate positions, a position calculated from the observation position 131 of which the transmission timing from the position calculation processing unit 11 is the newest, as the observation prediction position 133. Also, the second position calculating unit 113 may calculate, for instance, out of the calculated candidate positions, a position calculated from the observation position 131 corresponding the positioning object OB at a predetermined position (e.g., at a position specified in advance, e.g., near a center or the like) in the image data transmitted from the shooting devices 2, as the observation prediction position 133.

Also, in a case in which the observation position 131 is calculated by the position calculation processing unit 11 (in a case in which the observation position 131 is transmitted from the position calculation processing unit 11) before a predetermined amount of time elapses from the last prediction timing, the second position calculating unit 113 may calculate, for instance, the observation prediction position 133 on the basis of the posterior estimation position 134 at a prediction timing earlier than the last prediction timing (e.g., the prediction timing immediately prior to the last prediction timing) out of the plurality of prediction timings in the past, and the observation position 131 calculated by the position calculation processing unit 11.

The position predicting unit 114 may, for instance, predict the posterior estimation position 134 on the basis of the prior estimation position 132 calculated by the first position calculating unit 112, and the observation prediction position 133 calculated by the second position calculating unit 113. The position predicting unit 114 may then, for instance, store the calculated posterior estimation position 134 in the information storage region 130.

Specifically, the position predicting unit 114 may, for instance, predict a position partway between the prior estimation position 132 calculated by the first position calculating unit 112 and the observation prediction position 133 calculated by the second position calculating unit 113, as the posterior estimation position 134.

### Overview of Position Prediction Processing According to First Embodiment

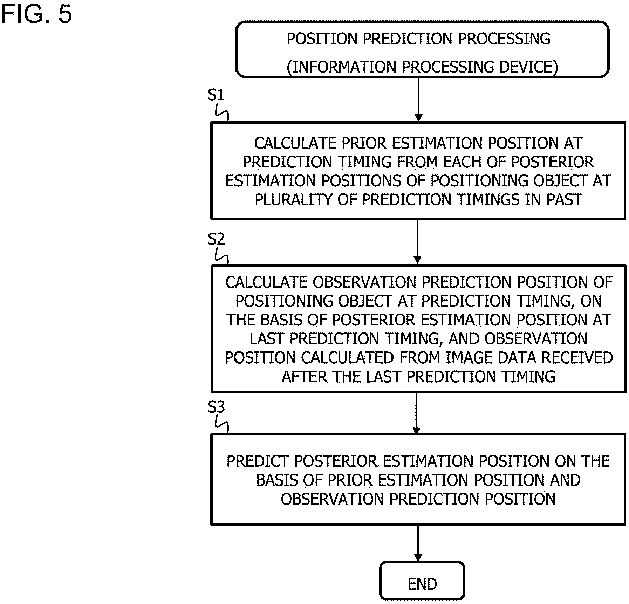

Next, an overview of the first embodiment will be described. FIGS. 5 to 7 are flowcharts that describe an overview of position prediction processing according to the first embodiment.

As illustrated in FIG. 5, the information processing device 1 may, for instance, calculate the prior estimation position 132 of the positioning object OB at the next prediction timing from each of the posterior estimation positions 134 of the positioning object OB at the plurality of prediction timings in the past (S1).

The information processing device 1 may then, for instance, calculate the observation prediction position 133 of the positioning object OB at the next prediction timing, on the basis of the posterior estimation position 134 at the last prediction timing out of the plurality of prediction timings in the past, and the observation position 131 calculated from the image data received from the shooting devices 2 after the last prediction timing (S2).

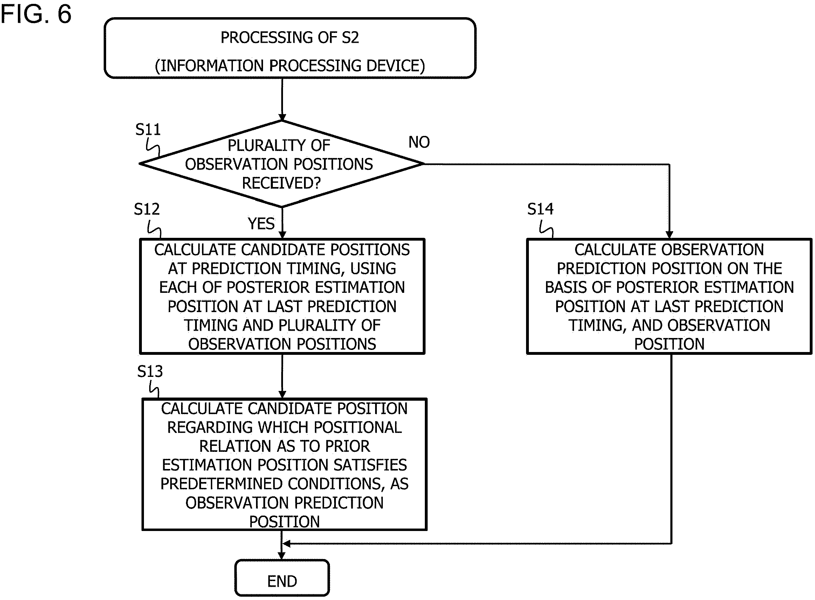

Specifically, as illustrated in FIG. 6, the information processing device 1 may determine, for instance, whether or not a plurality of observation positions 131 are received from the position calculation processing unit 11 between after the last prediction timing and the next prediction timing (S11).

In a case of determining that a plurality of observation positions 131 are received from the position calculation processing unit 11 as a result (YES in S11), the information processing device 1 may, for instance, calculate respective candidate positions for the positioning object OB at the next prediction timing, by using each of the posterior estimation position 134 at the last prediction timing out of the plurality of prediction timings in the past, and the plurality of observation positions 131 that are received (S12).

The information processing device 1 may then, for instance, calculate a position out of the candidate positions calculated in the processing of S12, regarding which a positional relation as to the prior estimation position 132 calculated in the processing in S1 satisfies predetermined conditions, as the observation prediction position 133 (S13).

Conversely, in a case of determining that a plurality of observation positions 131 are not received from the position calculation processing unit 11 (NO in S11), the information processing device 1 may, for instance, calculate the observation prediction position 133 of the positioning object OB at the next prediction timing by using the posterior estimation position 134 at the last prediction timing out of the plurality of prediction timings in the past, and the received observation position 131 (S14).

Note that in a case in which no observation position 131 is received from the position calculation processing unit 11 between after the last prediction timing and the next prediction timing, the information processing device 1 may, for instance, calculate the observation prediction position 133 of the positioning object OB at the next prediction timing by using the prior estimation position 132 calculated in the processing in S1, instead of the observation position 131.

Returning to FIG. 5, the information processing device 1 may predict, for instance, the posterior estimation position 134 on the basis of the prior estimation position 132 calculated in the processing in S1, and the observation prediction position 133 calculated in the processing in S2 (S3).

Specifically, in this case, the information processing device 1 may calculate, for instance, out of the candidate positions calculated in the processing in S2, the position closest to the prior estimation position 132 calculated in the processing in S1, as the observation prediction position 133.

Accordingly, the information processing device 1 according to the present embodiment can calculate the observation prediction position 133, even in a case in which the communication conditions on the network between the shooting devices 2 and the information processing device 1 are not good, and a plurality of observation positions 131 are consecutively transmitted from the position calculation processing unit 11 within a short amount of time, for instance. Also, the information processing device 1 can calculate the observation prediction position 133, even in a case in which a plurality of observation positions 131 are consecutively transmitted from the position calculation processing unit 11 within a short amount of time, due to processing latency or the like occurring at the position calculation processing unit 11, for instance. Accordingly, the information processing device 1 can perform tracking of the positioning object OB with good precision even in such cases, for instance.

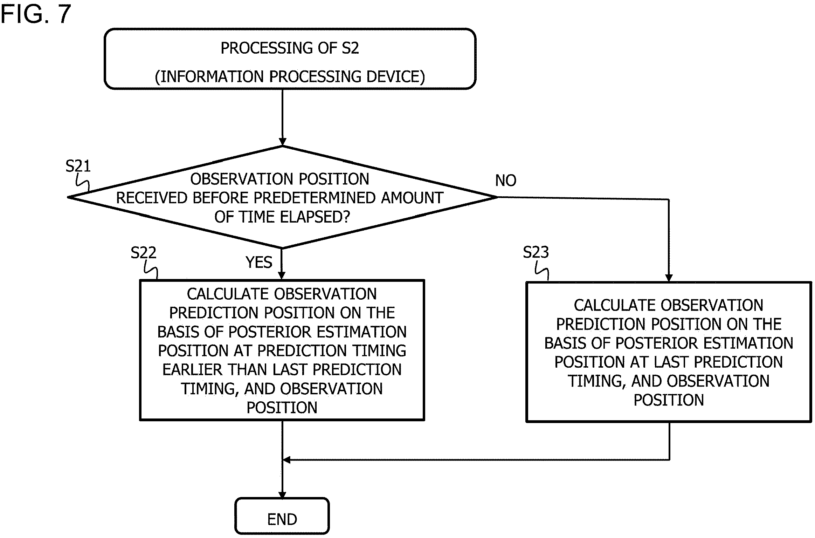

Note that in the processing of S2, the information processing device 1 may perform the processing illustrated in FIG. 7, instead of the processing described in FIG. 6, for instance.

Specifically, as illustrated in FIG. 7, the information processing device 1 may determine, for instance, whether or not the observation position 131 is received from the position calculation processing unit 11 before a predetermined amount of time elapses from the last prediction timing (S21).

In a case of determining that the observation position 131 is received from the position calculation processing unit 11 before a predetermined amount of time elapses from the last prediction timing as a result (YES in S21), the information processing device 1 may, for instance, calculate the observation prediction position 133 on the basis of the posterior estimation position 134 at a prediction timing earlier than the last prediction timing out of the plurality of prediction timings in the past, and the received observation position 131 (S22).

Conversely, in a case of determining that the observation position 131 is received from the position calculation processing unit 11 after the predetermined amount of time elapsed from the last prediction timing (NO in S21), the information processing device 1 may, for instance, calculate the observation prediction position 133 on the basis of the posterior estimation position 134 at the last prediction timing out of the plurality of prediction timings in the past, and the received observation position 131 (S23).

That is to say, the observation prediction position 133 may be, for instance, on an extended line of the posterior estimation position 134 at the last prediction timing and the observation position 131 received from the position calculation processing unit 11 after the last prediction timing. Accordingly, in a case in which the distance between the posterior estimation position 134 at the last prediction timing and the observation position 131 received from the position calculation processing unit 11 after the last prediction timing is short, in other words, in a case in which an interval between a calculation timing of the posterior estimation position 134 at the last prediction timing and a calculation timing of the observation position 131 received from the position calculation processing unit 11 after the last prediction timing is short, for instance, there is a possibility that the precision of the information processing device 1 predicting the observation prediction position 133 will deteriorate.

Accordingly, in a case of receiving the observation position 131 from the position calculation processing unit 11 before the predetermined amount of time elapses from the last prediction timing, the information processing device 1 may, for instance, calculate the observation prediction position 133 by using the posterior estimation position 134 at a prediction timing earlier than the last prediction timing (e.g., a prediction timing immediately prior to the last prediction timing) instead of the posterior estimation position 134 at the last prediction timing.

Accordingly, the information processing device 1 according to the present embodiment can calculate the observation prediction position 133 with good precision, even in a case in which the communication conditions on the network between the shooting devices 2 and the information processing device 1 are not good, and the calculation timing of the posterior estimation position 134 and the calculation timing of the observation position 131 are close to each other, for instance. Also, the information processing device 1 can calculate the observation prediction position 133 with good precision, even in a case in which the calculation timing of the posterior estimation position 134 and the calculation timing of the observation position 131 are close to each other, due to processing latency or the like occurring at the position calculation processing unit 11, for instance. Accordingly, the information processing device 1 can perform tracking of the positioning object OB with good precision even in such cases, for instance.

### Details of Position Prediction Processing According to First Embodiment

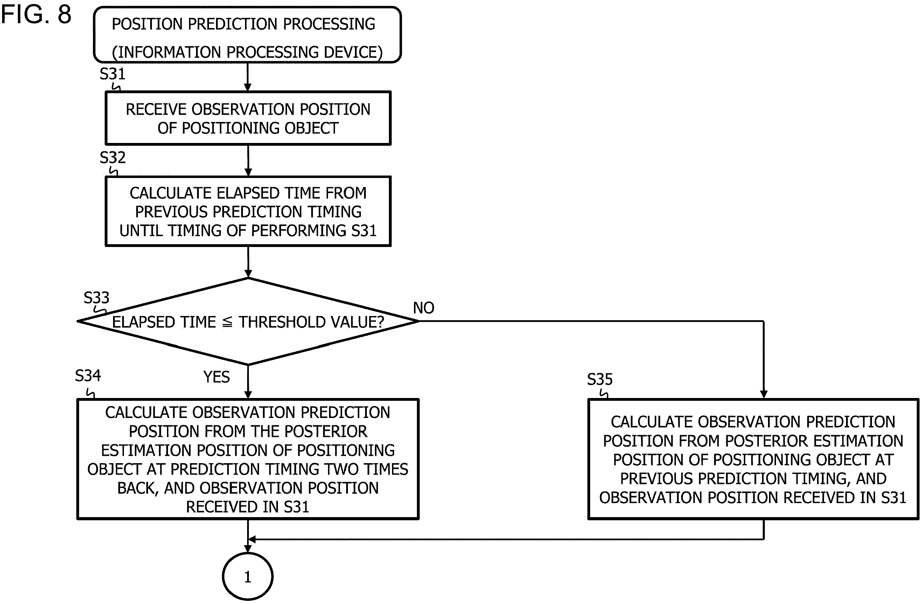

Next, details of the position prediction processing according to the first embodiment will be described. FIGS. 8 to 10 are flowcharts describing the position prediction processing according to the first embodiment.

### Main Processing of Position Prediction Processing

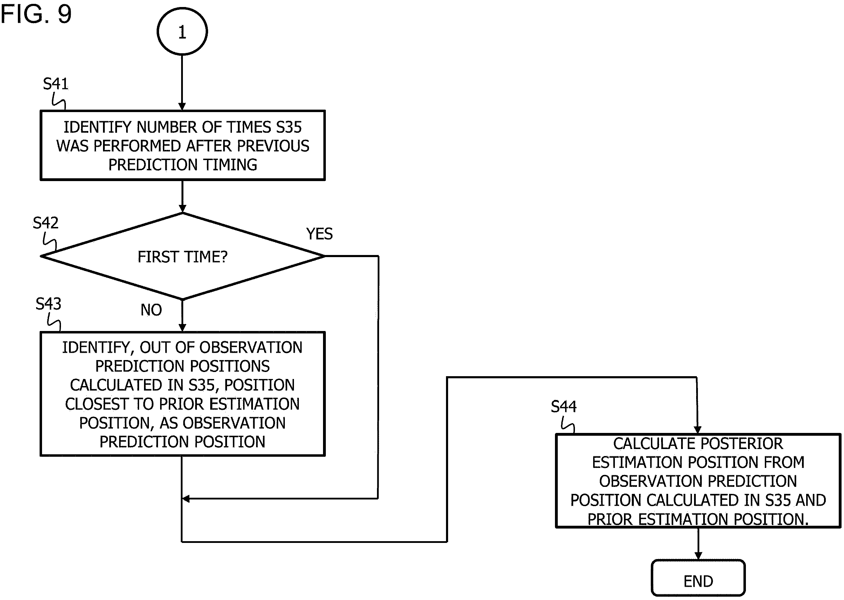

First, main processing of the position prediction processing will be described. FIGS. 8 and 9 are flowcharts describing main processing of the position prediction processing according to the first embodiment.

As illustrated in FIG. 8, the position receiving unit 111 may, for instance, receive the observation position 131 calculated by the position calculation processing unit 11 (S31).

Specifically, in a case of receiving image data transmitted from the shooting devices 2, the position calculation processing unit 11 may, for instance, recognize the positioning object OB in the received image data, and also calculate the observation position 131 of the positioning object OB (e.g., coordinates in real space). The position receiving unit 111 may then receive, for instance, the observation position 131 transmitted from the position calculation processing unit 11.

Also, in this case, the position receiving unit 111 may add, for instance, to the received observation position 131, identification information of the positioning object OB (hereinafter, also referred to as "positioning object ID") corresponding to the received observation position 131. The position receiving unit 111 may then, for instance, store the observation position 131 to which the positioning object ID is added in the information storage region 130.

Specifically, in this case, the position receiving unit 111 may, for instance, reference an observation position 131 received from the position calculation processing unit 11 in the past (an observation position 131 to which a positioning object ID is added), and identify the positioning object ID corresponding to the observation position 131 nearby the received observation position 131. The position receiving unit 111 may then, for instance, add the identified positioning object ID to the received observation position 131.

Note that adding of the positioning object ID to the observation position 131 may be performed at the position calculation processing unit 11 in advance, for instance.

The first position calculating unit 112 may then, for instance, calculate the time elapsed from the prediction timing of the previous time until the timing of performing the processing of S31 (hereinafter, also referred to simply as "elapsed time") (S32).

In a case in which the elapsed time is no longer than a threshold value that is set in advance (hereinafter, also referred to simply as "threshold value") as a result (YES in S33), the first position calculating unit 112 may, for instance, calculate the observation prediction position 133 from the posterior estimation position 134 of the positioning object OB at the prediction timing from two times back, and the observation position 131 received in the processing in S31 (S34). This threshold value may be 50 ms, for instance. The first position calculating unit 112 may then, for instance, store the calculated observation prediction position 133 in the information storage region 130.

Specifically, the first position calculating unit 112 may obtain, for instance, out of the posterior estimation positions 134 stored in the information storage region 130, a posterior estimation position 134 that corresponds to the positioning object ID added to the observation position 131 received in the processing of S31 and that is the posterior estimation position 134 with the second-newest time of generation. The first position calculating unit 112 may then, for instance, calculate the observation prediction position 133 by using the obtained posterior estimation position 134.

That is to say, in this case, the first position calculating unit 112 may, for instance, perform calculation of the observation prediction position 133 by using the posterior estimation position 134 of the positioning object OB at the prediction timing from two times back, instead of the posterior estimation position 134 of the positioning object OB at the prediction timing of the previous time, in the same way as the case described regarding the processing in S22 in FIG. 7.

Conversely, in a case in which the elapsed time is not no longer than the threshold value that is set in advance (NO in S33), the first position calculating unit 112 may, for instance, calculate the observation prediction position 133 from the posterior estimation position 134 of the positioning object OB at the prediction timing of the previous time, and the observation position 131 received in the processing of S31 (S35). The first position calculating unit 112 may then, for instance, store the calculated observation prediction position 133 in the information storage region 130.

Specifically, the first position calculating unit 112 may obtain, for instance, out of the posterior estimation positions 134 stored in the information storage region 130, a posterior estimation position 134 that corresponds to the positioning object ID added to the observation position 131 received in the processing of S31 and that is the posterior estimation position 134 with the newest time of generation. The first position calculating unit 112 may then, for instance, calculate the observation prediction position 133 by using the obtained posterior estimation position 134.

Next, as illustrated in FIG. 9, the first position calculating unit 112 may, for instance, identify the number of times that the processing of S35 was performed after the prediction timing of the previous time (S41).

In a case in which the number of times that the processing of S35 was performed after the prediction timing of the previous time is two times or more, i.e., the number of times of the processing of S35 being performed immediately prior is not the first time (NO in S42), as a result, the first position calculating unit 112 may identify, for instance, out of the observation prediction positions 133 calculated in the processing of S35, the position that is closest to the prior estimation position 132 as the observation prediction position 133 (S43).

Specifically, the first position calculating unit 112 may identify, for instance, out of the observation prediction positions 133 calculated in the processing of S35, the position that is closest to the prior estimation position 132 with the newest time of generation as the observation prediction position 133.

That is to say, in this case, the first position calculating unit 112 may identify, for instance, out of the observation prediction positions 133 (candidate positions) calculated in the processing of S35, the position that is closest to the prior estimation position 132 as the observation prediction position 133, in the same way as in the case described in the processing of S12 and S13 in FIG. 6.

Conversely, in a case in which the number of times that the processing of S35 was performed after the prediction timing of the previous time is the first time (YES in S42), the first position calculating unit 112 preferably does not perform the processing of S43, for instance.

Thereafter, the position predicting unit 114 may, for instance, calculate the posterior estimation position 134 from the observation prediction position 133 calculated in the processing of S35 (the observation prediction position 133 identified in the processing of S43) and the prior estimation position 132 (S44). The position predicting unit 114 may then, for instance, store the calculated posterior estimation position 134 in the information storage region 130.

Specifically, the first position calculating unit 112 may acquire, for instance, out of the prior estimation positions 132 stored in the information storage region 130 (prior estimation positions 132 calculated by later-described prior estimation position calculating processing), the prior estimation position 132 that corresponds to the positioning object ID added to the observation position 131 received in the processing of S31 and that is the prior estimation position 132 with the newest time of generation. The first position calculating unit 112 may then calculate, for instance, the posterior estimation position 134 by using the obtained prior estimation position 132.

### Prior Estimation Position Calculating Processing

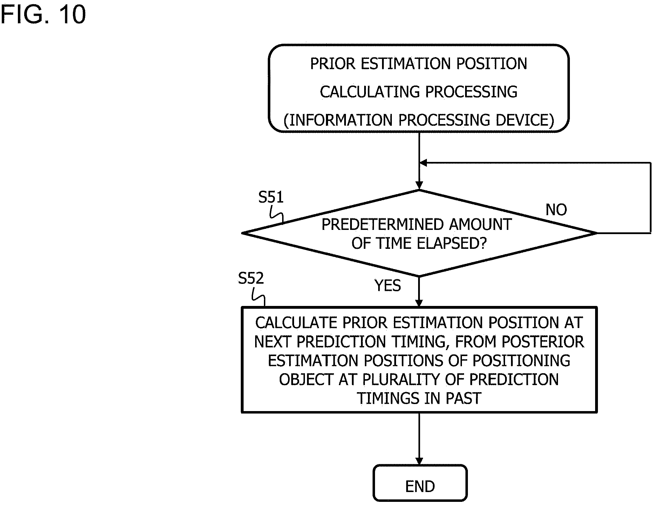

Next, description will be made regarding processing for calculating the prior estimation position 132 in the position prediction processing (hereinafter, also referred to as "prior estimation position calculating processing"). FIG. 10 is a flowchart for describing the prior estimation position calculating processing according to the first embodiment.

As illustrated in FIG. 10, the first position calculating unit 112 may, for instance, stand by until a predetermined amount of time elapses from the previous time of performing the processing of S52 (NO in S51). The predetermined amount of time here may be a periodic cycle, e.g., 200 ms or the like, for instance.

In a case in which the predetermined amount of time elapses from the previous time of performing the processing of S52 (YES in S51), the first position calculating unit 112 may, for instance, calculate the prior estimation position 132 at the next prediction timing, from the posterior estimation positions 134 of the positioning object OB at a plurality of prediction timings in the past (S52).

Specifically, the first position calculating unit 112 may, for instance, estimate the posterior estimation position 134 of the positioning object OB at the next prediction timing from the trail of the posterior estimation positions 134 of the positioning object OB at the plurality of prediction timings in the past, and calculate the estimated posterior estimation position 134 as the prior estimation position 132.

Note that the first position calculating unit 112 may, for instance, calculate the prior estimation position 132 at the next prediction timing in response to receiving a notification from a timer (omitted from illustration) that performs notification each predetermined amount of time.

Thus, the information processing device 1 according to the present embodiment may, for instance, calculate the prior estimation position 132 of the positioning object OB at the next prediction timing from each posterior estimation position 134 of the positioning object OB at the plurality of prediction timings in the past, in the tracking processing unit 12. The information processing device 1 may then, for instance, calculate the observation prediction position 133 at the next prediction timing, on the basis of the posterior estimation position 134 at the last prediction timing out of the plurality of prediction timings in the past, and the observation position 131 calculated from the image data received from the shooting devices 2 after the last prediction timing. Thereafter, the information processing device 1 may, for instance, predict the posterior estimation position 134 on the basis of the prior estimation position 132 and the observation prediction position 133.

Specifically, in a case in which a plurality of observation positions 131 are calculated between after the last prediction timing and the prediction timing, the information processing device 1 according to the present embodiment may, for instance, calculate candidate positions of the positioning object OB at the prediction timing by using each of the plurality of observation positions 131. The information processing device 1 may then calculate, for instance, a position out of the calculated candidate positions regarding which a positional relation as to the candidate positions satisfies predetermined conditions, as the observation prediction position 133.

That is to say, in a case in which a plurality of observation positions 131 that are usable for calculation of the observation prediction position 133 arise between the prediction timing of the previous time and the next prediction timing, for instance, the information processing device 1 according to the present embodiment may use, out of the candidate positions calculated using each observation position 131, the candidate position that is the closest to the prior estimation position 132, as the observation prediction position 133.

Thus, the information processing device 1 according to the present embodiment can calculate the posterior estimation position 134 of the positioning object OB at the next prediction timing, even in a case in which the communication conditions on the network between the shooting devices 2 and the information processing device 1 are not good, and the reception timing of image data at the position calculation processing unit 11 is not unform, for instance. Also, the information processing device 1 can calculate the posterior estimation position 134 of the positioning object OB at the next prediction timing, even in a case in which reception timing of the observation position 131 at the tracking processing unit 12 is not uniform, due to processing latency occurring at the position calculation processing unit 11, for instance. Accordingly, the information processing device 1 can perform tracking of the positioning object OB with good precision even in such cases, for instance.

Also, in a case in which the observation position 131 is calculated from image data received from the shooting devices 2 before a predetermined amount of time elapses from the last prediction timing out of the plurality of prediction timings in the past, information processing device 1 according to the present embodiment may calculate, for instance, the observation prediction position 133 on the basis of the posterior estimation position 134 at a timing earlier than the last prediction timing out of the plurality of prediction timings in the past, and the observation position 131 calculated from the image data received from the shooting devices 2.

Accordingly, the information processing device 1 according to the present embodiment can calculate the observation prediction position 133 with good precision, even in a case in which the communication conditions on the network between the shooting devices 2 and the information processing device 1 are not good, and the calculation timing of the posterior estimation position 134 and the calculation timing of the observation position 131 are close to each other, for instance. Also, the information processing device 1 can calculate the observation prediction position 133 with good precision, even in a case in which the calculation timing of the posterior estimation position 134 and the calculation timing of the observation position 131 are close to each other, due to processing latency occurring at the position calculation processing unit 11, for instance. Accordingly, the information processing device 1 can perform tracking of the positioning object OB with good precision even in such cases, for instance.

Accordingly, the information processing device 1 according to the present embodiment can perform tracking of the positioning object OB with good precision, without matching transmission timings of each piece of image data from the shooting devices 2 to the position calculation processing unit 11, or transmission timings of each observation position 131 from the position calculation processing unit 11 to the tracking processing unit 12, for instance.

### Specific Example of Position Prediction Processing

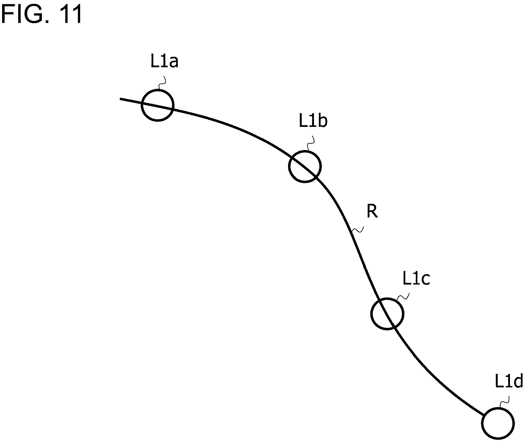

Next, description will be made regarding a specific example of position prediction processing. FIGS. 11 to 16 are diagrams describing a specific example of position prediction processing.

The example in FIG. 11 illustrates that position prediction processing has been performed four times, and that position L1a, position L1b, position L1c, and position L1d have each been calculated as posterior estimation positions 134. That is to say, the example in FIG. 11 illustrates that a route R is predicted as a route of travel of the positioning object OB, for instance.

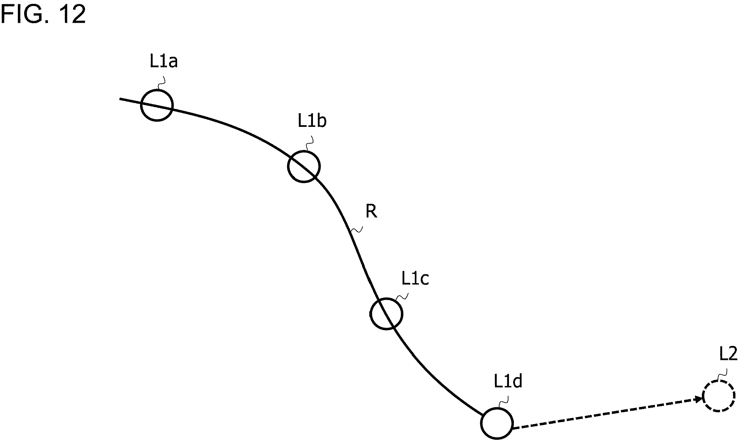

The information processing device 1 may then, for instance, calculate a position L2 as the prior estimation position 132 as illustrated in FIG. 12, in accordance with a prior estimation position calculation timing arriving (S52). Specifically, the information processing device 1 may, for instance, calculate the position L2 as the prior estimation position 132, from the trail of the position L1a, the position L1b, the position L1c, and the position L1d that are posterior estimation positions 134.

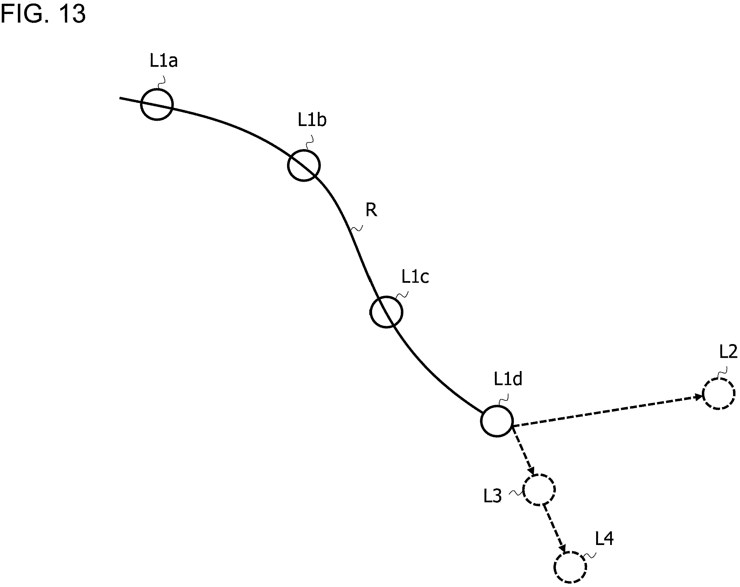

Also, in a case of receiving a position L3 from the position calculation processing unit 11 as the observation position 131, the information processing device 1 may, for instance, calculate a position L4 as the observation prediction position 133, by using the position L1d that is the posterior estimation position 134 and the position L3 that is the observation position 131, as illustrated in FIG. 13 (S35).

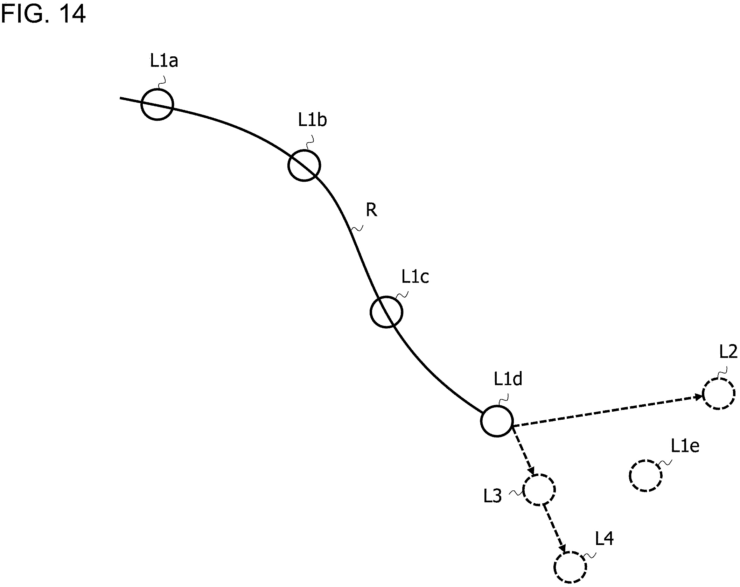

Thereafter, the information processing device 1 may, for instance, calculate a position L1e as a new posterior estimation position 134, by using the position L2 that is the prior estimation position 132 and the position L4 that is the observation prediction position 133, as illustrated in FIG. 14 (S44).

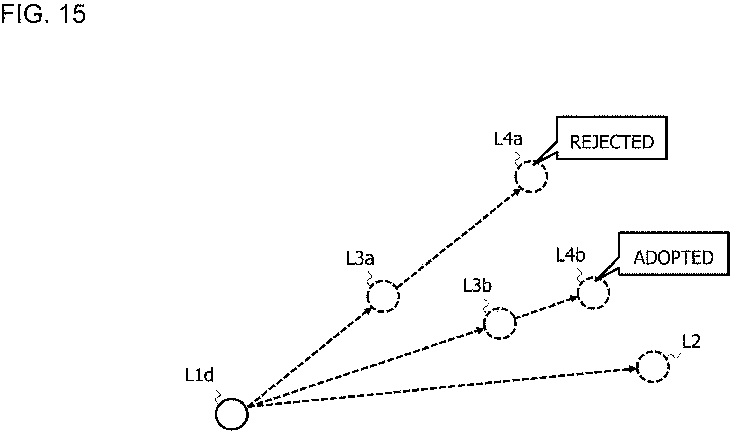

Now, in a case of receiving position L3a and position L3b as observation positions 131 from the position calculation processing unit 11 after the position L1d, which is the posterior estimation position 134 being calculated, the information processing device 1 may, for instance, calculate position L4a by using the position L1d and the position L3a, and also calculate position L4b by using the position L1d and the position L3b, as illustrated in FIG. 15 (S34). In a case in which the distance from the position L2 that is the prior estimation position 132 is closer to the position L4b than the position L4a, the information processing device 1 may then, for instance, identify the position L4b as the observation prediction position 133, as illustrated in FIG. 15 (S43).

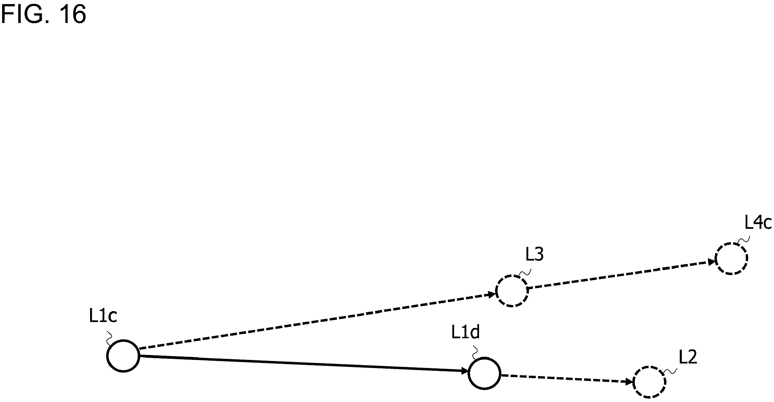

Also, in a case of receiving the position L3 that is the observation position 131 from the position calculation processing unit 11 before a predetermined amount of time elapses from the position L1d that is the posterior estimation position 134 being calculated, the information processing device 1 may, for instance, calculate position L4c that is the observation prediction position 133, by using the position L1c instead of the position L1d, as illustrated in FIG. 16.

According to the aspect, tracking of positioning objects can be performed high precision.

In any of the above aspects, the various features may be implemented in hardware, or as software modules running on one or more processors/computers.

The invention also provides a computer program or a computer program product comprising instructions which, when executed by a computer, cause the computer to carry out any of the methods/method steps described herein, and a non-transitory computer-readable medium comprising instructions which, when executed by a computer, cause the computer to carry out any of the methods/method steps described herein. A computer program embodying the invention may be stored on a non-transitory computer-readable medium, or it could, for example, be in the form of a signal such as a downloadable data signal provided from an Internet website, or it could be in any other form.

### REFERENCE SIGNS LIST

1: INFORMATION PROCESSING DEVICE
2a: SHOOTING DEVICE
2b: SHOOTING DEVICE
2c: SHOOTING DEVICE
2d: SHOOTING DEVICE
101: CPU
102: MEMORY
103: I/O INTERFACE
104: STORAGE
105: BUS
130: INFORMATION STORAGE REGION

## Claims

1. A position prediction program (110) that causes a computer (1) to execute a process comprising:
first calculating, from each of a second positions (134) of a positioning object (OB) at a plurality of prediction timings in the past, a third position (132) of the positioning object (OB) at a prediction timing;
second calculating, on the basis of the second position (134) at a last prediction timing out of the plurality of prediction timings and a first position (131) of the positioning object (OB) calculated from image data received from a shooting device after the last prediction timing, a fourth position (133) of the positioning object (OB) at the prediction timing; and
predicting the second position (134) at the prediction timing on the basis of the third position (132) and the fourth position (133), wherein
the second calculating includes:
in a case in which a plurality of the first positions (131) are calculated between after the last prediction timing and the prediction timing, calculating each of fifth positions of the positioning object (OB) at the prediction timing by using each of a plurality of the first positions (131) that have been calculated, and
out of the fifth positions that are calculated, calculating a position regarding which a positional relation as to the third position (132) satisfies a predetermined condition as the fourth position (133).

2. The position prediction program (110) according to claim 1, wherein the second calculating includes calculating a position out of the fifth positions, of which a distance from the third position (132) is closest, as the fourth position (133).

3. The position prediction program (110) according to any preceding claim, wherein the second calculating includes, in a case in which the first position (131) is calculated before a predetermined amount of time elapses from the last prediction timing, calculating the fourth position (133) on the basis of the second position (134) at a timing earlier than the last prediction timing out of the plurality of prediction timings and the first position (131).

4. The position prediction program (110) according to any preceding claim, wherein the first calculating includes estimating the third position (132) from a trail of the second positions (134) of the positioning object (OB) at the plurality of prediction timings.

5. A position prediction program (110) that causes a computer (1) to execute a process comprising:
first calculating, from each of a second positions (134) of a positioning object (OB) at a plurality of prediction timings in the past, a third position (132) of the positioning object (OB) at a prediction timing;
second calculating, on the basis of the second position (134) at a last prediction timing out of the plurality of prediction timings and a first position (131) of the positioning object (OB) calculated from image data received from a shooting device after the last prediction timing, a fourth position (133) of the positioning object (OB) at the prediction timing; and
predicting the second position (134) at the prediction timing on the basis of the third position (132) and the fourth position (133), wherein
the second calculating includes, in a case in which the first position (131) is calculated before a predetermined amount of time elapses from the last prediction timing, calculating the fourth position (133) on the basis of the second position (134) at a timing earlier than the last prediction timing out of the plurality of prediction timings and the first position (131).

6. An information processing device (1) comprising:
a memory (102); and
a processor (101) coupled to the memory (102) and the processor (101) configured to:
calculate, from each of a second positions (134) of a positioning object (OB) at a plurality of prediction timings in the past, a third position (132) of the positioning object (OB) at a prediction timing;
calculate, on the basis of the second position (134) at a last prediction timing out of the plurality of prediction timings and a first position (131) of the positioning object (OB) calculated from image data received from a shooting device after the last prediction timing, a fourth position (133) of the positioning object (OB) at the prediction timing; and
predict the second position (134) at the prediction timing on the basis of the third position (132) and the fourth position (133), wherein
the processor (101) calculates, in a case in which a plurality of the first positions (131) are calculated between after the last prediction timing and the prediction timing, each of fifth positions of the positioning object (OB) at the prediction timing by using each of a plurality of the first positions (131) that have been calculated, and calculates, out of the fifth positions that are calculated, a position regarding which a positional relation with the third position (132) satisfies a predetermined condition as the fourth position (133).

7. The information processing device (1) according to claim 6, wherein, in a case in which the first position (131) is calculated before a predetermined amount of time elapses from the last prediction timing, the processor (101) calculates the fourth position (133) on the basis of the second position (134) at a timing earlier than the last prediction timing out of the plurality of prediction timings and the first position (131).

8. An information processing device (1) comprising:
a memory (102); and
a processor (101) coupled to the memory (102) and the processor (101) configured to:
calculate, from each of a second positions (134) of a positioning object (OB) at a plurality of prediction timings in the past, a third position (132) of the positioning object (OB) at a prediction timing;
calculate, on the basis of the second position (134) at a last prediction timing out of the plurality of prediction timings and a first position (131) of the positioning object (OB) calculated from image data received from a shooting device after the last prediction timing, a fourth position (133) of the positioning object (OB) at the prediction timing; and
predict the second position (134) at the prediction timing on the basis of the third position (132) and the fourth position (133), wherein
in a case in which the first position (131) is calculated before a predetermined amount of time elapses from the last prediction timing, the processor (101) calculates the fourth position (133) on the basis of the second position (134) at a timing earlier than the last prediction timing out of the plurality of prediction timings and the first position (131).

9. A position prediction method comprising:
first calculating, by a processor (101), from each of a second positions (134) of a positioning object (OB) at a plurality of prediction timings in the past, a third position (132) of the positioning object (OB) at a prediction timing;
second calculating, by a processor (101), on the basis of the second position (134) at a last prediction timing out of the plurality of prediction timings and a first position (131) of the positioning object (OB) calculated from image data received from a shooting device after the last prediction timing, a fourth position (133) of the positioning object (OB) at the prediction timing; and
predicting, by a processor (101), the second position (134) at the prediction timing on the basis of the third position (132) and the fourth position (133), wherein
the second calculating includes:
in a case in which a plurality of the first positions (131) are calculated between after the last prediction timing and the prediction timing, calculating each of fifth positions of the positioning object (OB) at the prediction timing by using each of a plurality of the first positions (131) that have been calculated, and
out of the fifth positions that are calculated, calculating a position regarding which a positional relation with the third position (132) satisfies a predetermined condition as the fourth position (133).

10. The position prediction method according to claim 9, wherein the second calculating includes, in a case in which the first position (131) is calculated before a predetermined amount of time elapses from the last prediction timing, calculating the fourth position (133) on the basis of the second position (134) at a timing earlier than the last prediction timing out of the plurality of prediction timings and the first position (131).

11. A position prediction method comprising:
first calculating, from each of a second positions (134) of a positioning object (OB) at a plurality of prediction timings in the past, a third position (132) of the positioning object (OB) at a prediction timing;
second calculating, on the basis of the second position (134) at a last prediction timing out of the plurality of prediction timings and a first position (131) of the positioning object (OB) calculated from image data received from a shooting device after the last prediction timing, a fourth position (133) of the positioning object (OB) at the prediction timing; and
predicting the second position (134) at the prediction timing on the basis of the third position (132) and the fourth position (133), wherein
the second calculating includes, in a case in which the first position (131) is calculated before a predetermined amount of time elapses from the last prediction timing, calculating the fourth position (133) on the basis of the second position (134) at a timing earlier than the last prediction timing out of the plurality of prediction timings and the first position (131).
